(19) Europäisches Patentamt
European Patent Office
Office européen des brevets

(11) **EP 2 260 969 B1**

(12) **FASCICULE DE BREVET EUROPEEN**

(45) Date de publication et mention
de la délivrance du brevet:
**04.03.2020 Bulletin 2020/10**

(51) Int Cl.:
**B23K 35/30** *(2006.01)*  **B23K 35/36** *(2006.01)*
**B23K 35/365** *(2006.01)*  **B23K 35/40** *(2006.01)*
**C22C 38/00** *(2006.01)*

(21) Numéro de dépôt: **10163195.0**

(22) Date de dépôt: **19.05.2010**

(54) **Electrode enrobée à âme en acier et enrobage au lithium**

Umhüllte Elektrode mit Stahlkern und Beschichtung von Lithium

Coated electrode with steel core and lithium coating

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **10.06.2009 FR 0953830**

(43) Date de publication de la demande:
**15.12.2010 Bulletin 2010/50**

(73) Titulaire: **Lincoln Electric France SAS
76120 Le Grand Quevilly (FR)**

(72) Inventeur: **Ehrhart, M. Gilles
95310 SAINT OUEN L'AUMONE (FR)**

(74) Mandataire: **Grosse Schumacher Knauer von
Hirschhausen
Patent- und Rechtsanwälte
Frühlingstrasse 43A
45133 Essen (DE)**

(56) Documents cités:
**EP-A1- 1 125 673    EP-A1- 1 570 944
FR-A1- 2 740 715    GB-A- 1 056 171
JP-A- 58 086 997    JP-A- 58 141 890
JP-A- 59 070 494    JP-A- 60 261 690**

**Description**

L'invention concerne une électrode enrobée pour soudage à l'arc électrique comprenant une âme centrale en acier recouverte d'un enrobage conduisant à un arc stable, régulier et dynamique tout au long de l'opération de soudage, y compris lors d'une opération de soudage manuel difficile, tel qu'un soudage en position, ainsi qu'un procédé de soudage utilisant une telle électrode.

La stabilité de l'arc électrique généré lors du soudage avec différentes enrobées a été étudiée, notamment par R. Dedyukh at al, Increasing the stability of the parameters of the process of arc welding with coated electrodes at low current, Welding International vol. 18 n°12 pp 963 (2004); et G. Datta, Arc-length, arc-voltage and mode of metal transfer in metal-arc welding with coated electrodes, IE (I) Journal-ME vol. 53 pp 181 (1973).

EP 1570944 A1 décrit un procédé et un electrode enrobée avec une âme centrale métallique en acier inoxydable ou en acier doux. EP 1125673 A1 décrit aussi un procédé et un electrode enrobée avec une âme centrale en métal ou en alliage metallique, par example en acier doux.

Dans ces documents, la stabilité d'arc a été reliée à la mesure de la fréquence des courts-circuits observés pendant le soudage et à leur durée.

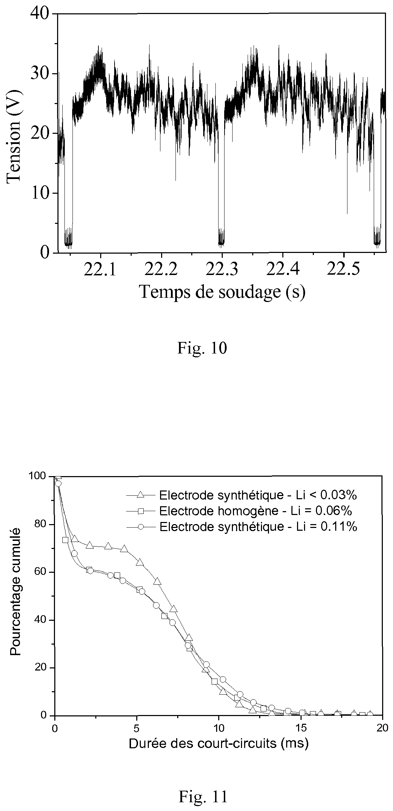

Les courts-circuits observés pendant le soudage sont dus à la formation d'un pont métallique liquide entre le bain de soudage et le bout de l'électrode en fusion. Leur fréquence et l'évolution de la tension entre chaque court-circuit sont liées à la longueur de l'arc : plus l'arc est court et plus cette fréquence est élevée et moins l'arc a le temps de se stabiliser entre deux court-circuits. Cela revient à continuellement observer une pente de tension entre deux court-circuits, indiquant que l'arc électrique n'a pas le temps de se stabiliser et de laisser le temps à une goutte de métal fondu de croître, comme illustré sur la Figure 10.

Dans le cas d'un arc court, à très court, par exemple de moins de 5 mm, chaque court-circuit est synonyme de transfert de métal dans le bain métallique (f > 6 Hz). Pour des fréquences identiques ou inférieures, il est possible d'observer des courts-circuits sans transfert systématique de métal dans le bain.

En ce qui concerne la durée des courts-circuits, celle-ci dépendrait à la fois de la longueur d'arc et de la facilité à décrocher la goutte de métal fondu pour que celle-ci soit transférée dans le bain. Il est donc possible d'associer ce phénomène de court-circuit à la stabilité de l'arc et à son dynamisme.

Toutefois, ces documents ne présentent pas les moyens d'améliorer le comportement opératoire d'une électrode enrobée en jouant sur sa composition.

En effet, dans le domaine du soudage, l'énergie (E) apportée par le consommable lors de la réalisation d'un assemblage de qualité est un facteur très important. Elle est déterminée par l'intensité (I) exprimée en ampères (A) du courant utilisé, la tension (U) exprimée en volts (V) entre le consommable et la tôle et la vitesse de soudage (V) exprimée en cm/min suivant la relation suivante :

$$E = \frac{U(V) \times I(A)}{V(cm.min^{-1}) \times k}$$

En particulier, un problème qui se pose est de pouvoir disposer d'une électrode enrobée dont le comportement opératoire a été amélioré, c'est-à-dire permettant d'obtenir un arc stable, régulier et dynamique tout au long du soudage avec ladite électrode enrobée, ainsi qu'une bonne résistance à la corrosion des joints de soudure ainsi réalisés, en particulier lorsqu'ils sont opérés sur des pièces métalliques servant à fabriquer des structures de type conduites de vapeur d'eau sous pression pour les centrales électriques fonctionnant aux énergies fossiles ou nucléaires.

En d'autres termes, le but visé est de proposer une électrode enrobée améliorée ayant un bon dynamisme d'arc permettant à l'opérateur un soudage aisé en position avec une large gamme d'intensité de courant, une stabilité des paramètres de soudage durant toute l'utilisation du consommable et des propriétés mécaniques suffisantes pour permettre en particulier le soudage des aciers ferritiques de grade 92, en particulier en respectant la norme ASTM A213 P92, utilisés pour leur propriétés mécaniques à chaud dans les centrales thermiques par exemple, ainsi qu'une bonne résistance à la corrosion.

Une solution est alors une électrode enrobée comprenant une âme centrale en acier au moins en partie recouverte d'un enrobage formant un revêtement autour de ladite âme centrale, l'âme centrale étant en acier faiblement ou non allié contenant du fer et moins de 5% en masse d'éléments d'alliage, et l'enrobage contenant du lithium, caractérisée en ce que l'enrobage contient de 0.06 à 1 % en masse de lithium (% en masse de l'enrobage) et en ce que l'âme centrale comprend de 0.001 à 4% de chrome (% en masse de l'âme).

En effet, la combinaison d'une âme faiblement ou non alliée avec un enrobage qui contient du lithium, en particulier de 0.06 à 1 % en masse de lithium, permet d'améliorer le comportement opératoire du consommable lors de son utilisation en soudage à l'arc, grâce à l'obtention d'un arc stable, régulier et dynamique tout au long de l'opération de soudage, y compris lors d'une opération de soudage manuel difficile, tel qu'un soudage en position, c'est-à-dire au plafond, en verticale montante, en corniche...

Par ailleurs, la présence de 0.001 à 4% de chrome (% en masse de l'âme) dans l'âme de l'électrode et/ou de 5 à 20% de chrome dans l'enrobage (% en masse de l'enrobage) permet de conférer une résistance à la corrosion du joint de soudure obtenu.

Selon le cas, l'électrode de l'invention peut comprendre l'une ou plusieurs des caractéristiques suivantes :

- l'âme centrale comprend de 0.001 à 3% de chrome (% en masse de l'âme), de préférence moins de 2,5% de chrome.
- l'enrobage contient de 5 à 20% de chrome (% en masse de l'enrobage).
- les éléments d'alliage de l'acier allié sont typiquement C, Mn, Si, Cr, Ni, Co, Mo, Nb, V, B, W et/ou N.
- l'électrode a une longueur comprise entre 30 et 45 cm, et un diamètre d'âme compris entre 1.6 et 6.3 mm, généralement entre 2.5 et 5.0mm.
- l'électrode contient de 0.02 à 0.30 % en masse de lithium par rapport à la masse totale de l'électrode, c'est-à-dire âme et enrobage.
- l'électrode contient du cobalt en une proportion allant jusqu'à 2 % par rapport au poids de l'électrode enrobée (i.e. enrobage et âme), de préférence 0.1 à 1.5% de cobalt. Avantageusement, l'âme contient jusqu'à 1,5% (% en masse de l'âme). En effet, l'addition de colbalt (Co) dans le métal déposé est bénéfique car elle permet d'augmenter la valeur de la température de transformation AC1 dudit métal déposé, ce qui offre une marge de sécurité accrue pour l'application d'un traitement thermique post-soudage.
- l'électrode contient de 0.9 à 2% de tungstène, de 0.001 à 0.1% de bore et/ou de 0.01 à 0.5% de niobium. Les éléments W, B et Nb sont incorporés à l'électrode, en particulier à l'enrobage, afin de conférer des propriétés de résistance au fluage au métal déposé. Si la balance de ces éléments n'est pas bien respectée ou si un de ces éléments est manquant, les propriétés de résistance au fluage s'en trouvent fortement dégradées.
- le lithium (Li) compris dans l'enrobage est sous la forme de silicate de Li, de carbonate de Li, de feldspath de Li, de fluorure de Li, de chlorure de Li, de titanate de Li ou d'oxyde de Li
- l'âme centrale comprend (% en masse de l'âme) de 0.01 à 0.15% de carbone, au plus 0.5% de silicium, au plus 1.5% de manganèse, au plus 0.02% de phosphore, au plus 0.01% de soufre, de 0.001 à 4% de chrome, au plus 1% de molybdène, au plus 1% de nickel, de 0.001 à 0.04% d'aluminium, au plus 1.5% de cobalt, au plus 0.1% de niobium, au plus 0.5% de vanadium, au plus 2.5% de tungstène, au plus 0.1% de bore, au plus 0.1% d'azote et/ou de 90 à 99.9% de fer.
- l'âme centrale comprend (% en masse de l'âme) de 0.01 à 0.10% de carbone, au plus 0.2% de silicium, au plus 1 % de manganèse, au plus 0.01% de phosphore, de 0.001 à 0. 1% de chrome, au plus 0.1% de molybdène, au plus 0.1% de nickel, au plus 0.01% d'aluminium, au plus 0.01% de cobalt, au plus 0.01% de niobium, au plus 0.05% de vanadium, au plus 0.1% de tungstène, au plus 0.01% de bore et/ou au plus 0.01% d'azote.
- l'électrode contient (% en masse de l'électrode) de 0.01 à 2% de carbone, de 0.5 à 4% de silicium, de 1 à 2.5% de manganèse, de 5 à 11% de chrome, de 0.1 à 1% de molybdène, de 0.1 à 1% de nickel, de 0.1 à 2% de cobalt, de 0.01 à 0.5% de niobium, de 0.1 à 0.5% de vanadium, de 0.9 à 2% de tungstène, de 0.001 à 0.1% de bore, de 0.01 à 0.1% d'azote, de 0.02 à 0.3% de lithium, de 0.01 à 0.5% de sodium, de 0.01 à 0.7% de potassium, de 5 à 15% de calcium, de 1 à 10% de fluor et/ou de 40 à 80 % de fer.
- l'enrobage peut contenir, en outre, un ou des carbonates de calcium, un ou des éléments d'alliages, un ou des éléments métalliques, du spath fluor, etc...

L'invention porte aussi sur un procédé de soudage à l'arc électrique d'une ou plusieurs pièces métalliques mettant en œuvre une électrode enrobée selon l'invention.

Selon le cas, le procédé de l'invention peut comprendre l'une ou plusieurs des caractéristiques suivantes :

- la ou les pièces à souder sont en un acier faiblement et/ou fortement allié contenant de 3 à 20 % en masse d'éléments d'alliage, y compris des aciers dissimilaires, par exemple un acier grade 23 ou 24 avec un acier grade 92 dans le cadre d'un assemblage dissimilaire.
- le soudage est opéré à plat, au plafond, en verticale montant ou en corniche.

En fait, dans le cadre de la présente invention, la composition de l'électrode enrobée a été choisie de manière à obtenir un comportement opératoire amélioré par rapport à une électrode standard, ainsi qu'un joint de soudure présentant une bonne résistance à la corrosion. Ce faisant, il a été remarqué, comme détaillé ci-dessous, qu'en ajoutant du lithium dans l'enrobage de l'électrode et du chrome dans l'âme, on résolvait le problème ci-dessus.

Un des moyens d'incorporer du lithium dans l'enrobage est basé sur l'utilisation d'un silicate adapté, à savoir d'un silicate de lithium. Ainsi, les silicates de lithium aqueux peuvent servir de liant pour la fabrication des pâtes d'enrobage pour électrodes. Si les silicates de sodium et de potassium ont été très largement utilisés pour fabriquer des consommables de soudage, le silicate de lithium l'a été rarement. De plus, l'utilisation de lithium n'a jamais été préconisée pour améliorer le comportement opératoire d'une électrode enrobée.

Plus précisément, dans le cadre de la présente invention, il a été mis au point une électrode permettant de souder dans un intervalle d'intensité de courant plus grand qu'une électrode standard et permettant de garder les paramètres de soudage stable durant l'opération.

La stabilité d'arc et le dynamisme du consommable de l'invention ont été améliorés en choisissant judicieusement la composition de l'âme métallique, à savoir un acier faiblement ou non allié, c'est-à-dire comprenant moins de 5 % d'éléments d'alliage, par exemple l'acier type NFA 35/055 (norme AFNOR).

Ainsi, on peut utiliser une électrode enrobée ayant une teneur en chrome de 0.001 à 4% dans son âme et une teneur en lithium entre 0,06 et 1% dans l'enrobage. Ceci permet également d'augmenter la plage de fonctionnement de l'électrode enrobée obtenue.

En fait, comme déjà dit, l'introduction d'une quantité minimale de l'élément lithium (Li) sous forme de silicate de Li, carbonate de Li, fluorure de Li, chlorure de Li, feldspath de Li,..., dans l'enrobage permet d'obtenir un dynamisme d'arc plus important, ce qui se traduit par un bain plus clair, un meilleur dégagement du laitier, un meilleur mouillage du cordon.

Globalement, cela permet d'obtenir une électrode enrobée donnant un résultat de meilleure qualité que les électrodes enrobées connues.

De plus, la combinaison de cet élément Li avec le fait d'utiliser une électrode dite « synthétique » car comprenant une âme centrale en acier faiblement ou non allié (i.e. avec moins de 5% en poids d'éléments d'alliage) mais destinée à être utilisée pour le soudage d'aciers fortement alliés, c'est-à-dire comprenant plus de 5% en poids d'éléments d'alliage, tel que C, Mn, Si, Cr, Ni, Co, Mo, Nb, V, B, W, N, permet d'obtenir une électrode enrobée pouvant souder sur une plus large gamme d'intensité tout en gardant un très bon comportement et une stabilité des paramètres de soudage.

L'invention va maintenant être illustrée par les exemples comparatifs suivants donnés et les figures annexées parmi lesquelles :

- La Figure 1 est un enregistrement des paramètres de tension et d'intensité lors du soudage avec une électrode homogène,
- La Figure 2 est similaire à la Figure 1 mais obtenue avec une électrode synthétique contenant moins de 0.06% de Li dans l'enrobage,
- La Figure 3 est similaire aux Figures 1 et 2 mais obtenue avec une électrode synthétique contenant 0.28% de Li dans l'enrobage,
- Les Figures 4 à 9 sont des photographies montrant les profils de cordons de soudage obtenus,
- La Figure 10 est un enregistrement de la tension d'une électrode lors de son soudage,
- La Figure 11 schématise la répartition de la durée des courts-circuits lors du soudage avec une électrode entière,
- La Figure 12 montre les répartitions des durées de court-circuit d'une électrode homogène contenant 0.15% de Li dans l'enrobage en fonction du temps de soudage,
- Les Figures 13 et 14 représentent les répartitions des durées de court-circuit d'une électrode synthétique contenant moins de 0.06% de Li dans l'enrobage (Fig. 13) ou contenant 0.28% de Li dans l'enrobage (Fig. 14) en fonction du temps de soudage, et
- La Figure 15 schématise une structure d'électrode enrobée.

Exemples

Dans le cadre des essais réalisés et consignés ci-après, on a utilisé une pince de soudage de type Stubby de marque Weldline™ munie d'une électrode enrobée, alimentée en courant électrique par un générateur de courant continu (CC+) de type Mega Arc 5 commercialisé par la société Oerlikon™ ou de type Digiwave 400A de marque SAF-FRO™.

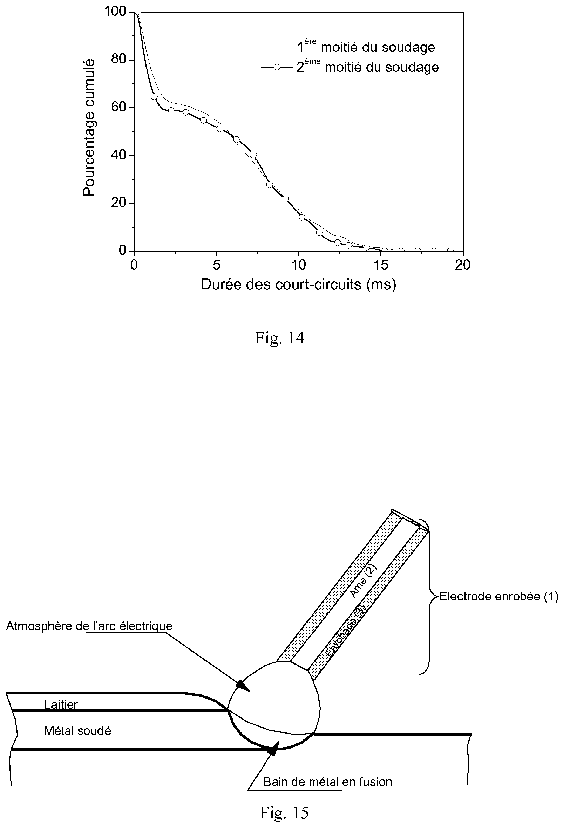

Typiquement, une électrode enrobée 1 se compose, comme illustré en Figure 15 d'une une âme centrale 2 en acier recouverte d'un enrobage 3 solide, formant un revêtement autour de ladite âme centrale 2. Une telle électrode a généralement une longueur comprise entre 30 et 45 cm, et un diamètre d'âme compris entre 1.6 et 6.3 mm, généralement entre 2.5 et 5.0mm.

Lors des essais, trois types d'électrodes ont été testées en soudage à l'arc d'acier grade 92, à savoir :

- des électrodes dites « homogènes » dont l'enrobage contient plus de 0.06% en masse de Li par rapport à l'enrobage,
- des électrodes dites « synthétiques » dont l'enrobage contient moins de 0.06% en masse de Li par rapport à l'enrobage,
- des électrodes dites « synthétiques » dont l'enrobage contient plus de 0.06% en masse de Li par rapport à l'enrobage.

Une « électrode homogène » est une électrode enrobée dont la composition chimique de l'âme métallique est très proche de celle du métal déposé (qui peut être proche de celle du métal de base). Dans ce cas, l'enrobage est composé d'éléments minéraux dont la décomposition dans l'arc électrique permet de libérer des éléments ionisant de l'arc, de former le gaz protecteur du bain, tels que CO et $CO_2$, et le laitier recouvrant le cordon. Ce dernier contient également quelques éléments d'alliage permettant d'ajuster plus finement la composition chimique du métal déposé.

Dans le cas du soudage des aciers de grade 92, l'âme a par exemple la composition chimique donnée dans le Tableau 1.

### Tableau 1 : Composition d'une âme d'électrode « homogène » pouvant servir au soudage des aciers de grade 92

| Elément | C | Si | Mn | P | S | Cr | Mo | Ni | Al |
|---|---|---|---|---|---|---|---|---|---|
| % en masse | 0.05 à 0.15 | Max 0.5 | Max 1.5 | Max 0.020 | Max 0.010 | 7.0 à 10 | Max 1.0 | Max 1.0 | Max 0.040 |
| % en masse typique | 0.13 | 0.26 | 0.81 | 0.008 | 0.010 | 8.6 | 0.42 | 0.49 | 0.002 |

### Tableau 1 (suite)

| Elément | Co | Nb | V | W | B | N |
|---|---|---|---|---|---|---|
| % en masse | 0.1 à 1.5 | 0.01 à 0.1 | 0.01 à 0.5 | 0.01 à 2.5 | 0.0001 à 0.1 | 0.001 à 0.1 |
| % en masse typique | 0.011 | 0.048 | 0.21 | 1.60 | 0.0024 | 0.039 |

Par ailleurs, une « électrode synthétique » est une électrode dont la composition chimique de l'âme diffère de façon importante, sur un ou plusieurs éléments, de la composition chimique du métal déposé. A titre d'exemple, cela revient à utiliser une âme considérée comme faiblement ou non alliée pour le soudage d'un acier considéré comme fortement allié.

Dans le cas des électrodes « synthétiques », les éléments d'alliage n'étant pas présents dans l'âme et que l'on retrouve dans le métal déposé proviennent de l'enrobage. Ce dernier est alors composé d'éléments minéraux dont la décomposition dans l'arc électrique permet de libérer des éléments ionisants de l'arc, de former le gaz protecteur du bain et le laitier recouvrant le cordon, et de poudres métalliques mono-élémentaires (Cr métal, Ni métal, Mn métal,...) ou poly-élémentaires (ferro-alliages, oxydes métalliques,...).

Dans le cas du soudage des aciers de grade 92, l'âme a par exemple la composition chimique présentée dans le Tableau 2.

Tableau 2 : composition d'une âme d'électrode « synthétique ».

| Elément | C | Si | Mn | P | S | Cr | Mo | Ni |
|---|---|---|---|---|---|---|---|---|
| % en masse | 0.01 à 0.15 | Max 0.5 | Max 1.5 | Max 0.020 | Max 0.010 | 0.001 à 4.0 | Max 1.0 | Max 1.0 |
| % en masse typique | 0.06 | 0.07 | 0.49 | 0.007 | 0.009 | 0.03 | 0.002 | 0.02 |

Tableau 2 (suite)

| Elément | Al | Co | Nb | V | W | B | N |
|---|---|---|---|---|---|---|---|
| % en masse | Max 0.040 | Max 1.5 | Max 0.1 | Max 0.5 | Max 2.5 | Max 0.1 | Max 0.1 |
| % en masse typique | 0.001 | 0.003 | 0.003 | 0.001 | <0.005 | <0.0001 | 0.002 |

Des essais de soudage ont donc été réalisés à l'aide des ces 3 types de consommables dont les compositions chimiques des âmes correspondaient à celles appelées « % en masse typique » telles que données dans les Tableaux 1 et 2.

Les enrobages étaient comme définis ci-dessus. En d'autres termes, les électrodes dites « synthétiques » ne se différencient les unes des autres que par la teneur en lithium qu'elles contiennent.

Il a tout d'abord été constaté que l'utilisation d'un consommable homogène avait un inconvénient majeur. En effet, le soudage manuel avec cette électrode montre une évolution de la tension lors du soudage.

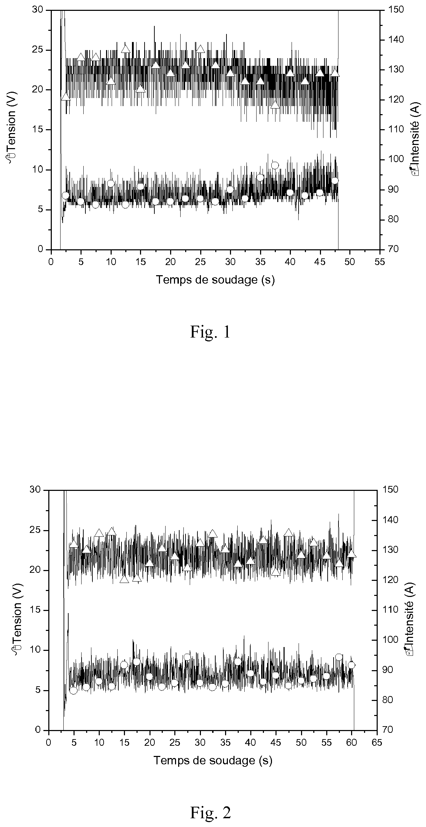

Ainsi, la figure 1 représente un enregistrement des paramètres de tension et d'intensité obtenu lors du soudage avec une électrode homogène contenant 0.15% en masse de Li dans l'enrobage (soit 0.06% en masse de Li dans l'électrode entière), de diamètre 2.5 mm en position à plat, à une intensité de 87 A, soit environ 90% de l'intensité maximum préconisée.

Il apparaît qu'à partir de 30 secondes de soudage, l'électrode commence à rougir. Le comportement du consommable change et le transfert de goutte devient plus grossier. Cela se caractérise, sur l'enregistrement, par une baisse de la tension et une augmentation de l'intensité. Cela engendre alors des variations des paramètres de soudage entraînant des perturbations de l'arc pouvant avoir pour conséquence une modification de l'énergie de soudage, ainsi qu'une variation du transfert des éléments d'alliage dans le bain fondu, ce qui engendre des aléas en termes d'homogénéité des résultats de soudage obtenus avec une telle électrode enrobée.

De là, une telle électrode n'est utilisable que dans une plage de fonctionnement obligatoirement limitée, c'est-à-dire allant de 70 à 85 A par exemple pour une électrode enrobée dite de diamètre 2.5mm, lorsque l'on veut être certain d'obtenir un cordon ne présentant pas de variation des paramètres de soudage.

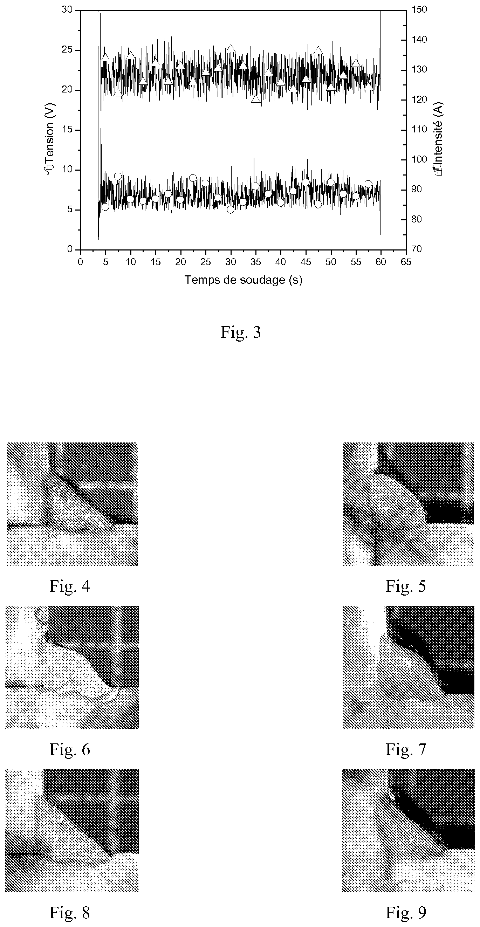

A l'inverse, comme le montre les Figures 2 et 3, l'utilisation d'une électrode enrobée synthétique permet d'obtenir des paramètres de tension et d'intensité stables tout au long du soudage, qu'elle contienne ou non plus de 0.06% en masse de lithium dans l'enrobage.

L'utilisation d'une âme faiblement ou non alliée (i.e. mois de 5 % en masse d'éléments d'alliage) évite donc l'échauffement du consommable pendant le soudage et garantit la stabilité des paramètres de tension et d'intensité.

Cette différence de comportement s'explique par la différence de conductivité qui existe entre un acier allié (plus de 5 % d'éléments d'alliage) et un acier faiblement ou non allié conduisant ainsi à une très bonne stabilité des paramètres de soudage.

En outre, l'ajout de lithium dans l'enrobage d'une électrode enrobée synthétique de diamètre 2.5 mm par exemple, à hauteur au moins de 0.06 % en masse de l'enrobage de l'électrode, permet d'augmenter la plage d'intensité de fonctionnement du consommable de la plage 80-100 A à la plage 70-100 A.

En effet, le lithium permet l'obtention de meilleures performances opératoires et le soudage d'un cordon avec une intensité plus faible et donc une énergie de soudage plus basse.

Il est à noter que cette différence d'environ 10 A permet également d'avoir un comportement opératoire de l'électrode enrobée supérieur à une même intensité de fonctionnement qu'une électrode synthétique contenant une quantité de lithium inférieure à 0.06% en masse dans l'enrobage.

Les figures 4 à 9 sont des photographies montrant les profils (coupes) de cordons de soudage obtenus en soudant avec les électrodes enrobées en position verticale montante avec des paramètres de 82 A et 21 V. Ces coupes de cordon sont présentées deux par deux pour montrer l'évolution du mouillage en fonction de la consommation de l'électrode.

Comme on le voit sur la Figure 4, avec l'électrode « homogène » utilisée, qui contient 0.15% en masse de Li dans l'enrobage, on obtient un cordon plat, donc un bon mouillage, en début de soudage.

Toutefois, on a pu observer un changement de comportement du consommable au cours du soudage qui est à associer à un échauffement de l'âme fortement alliée de l'électrode et qui a pour conséquence de modifier le transfert de goutte pendant le soudage, donnant ainsi un cordon plutôt bombé sur la fin du soudage, comme montré en Figure 5.

Les figures 6 et 7 présentent les formes de cordons obtenus dans les mêmes conditions opératoires, en début et fin de soudage respectivement, avec une électrode « synthétique » contenant moins de 0.06% en masse de Li dans l'enrobage.

On constate sur la Figure 6 que le cordon est légèrement bombé dès le début et que le comportement de l'électrode ne varie pas pendant l'opération puisqu'aucun échauffement de l'âme non alliée n'est visible sur la Figure 7.

Les Figures 8 et 9 concernent l'emploi d'une électrode « synthétique » contenant 0.28% en masse de Li dans l'enrobage au lieu de seulement 0.06% pour l'électrode utilisée précédemment. On peut constater sur les Figures 8 et 9 que cette seule différence avec l'électrode précédente (Fig. 6 et 7) permet d'obtenir un meilleur mouillage grâce au comportement plus dynamique de l'arc. Ce mouillage reste d'ailleurs identique durant toute l'opération de soudage (début de soudage : Fig. 8 ; fin de soudage : Fig. 9) montrant bien que l'absence d'échauffement de l'âme non alliée permet de conserver des paramètres de soudage constants.

Ces essais démontrent l'intérêt d'une électrode « synthétique » dont l'âme centrale est en acier faiblement ou non allié et dont l'enrobage contient du lithium, de préférence au moins 0.06% en masse de lithium dans l'enrobage, avantageusement de 0.06 à 0.5% en masse de lithium.

Des essais supplémentaires ont permis de mettre en évidence l'influence du lithium sur le dynamisme et la stabilité d'arc de l'électrode. Le « dynamisme d'un consommable » se caractérise par sa facilité à détacher les gouttes de métal lors de sa fusion dans l'arc.

Il convient donc de s'intéresser à la durée des courts-circuits et également à leur fréquence lors du soudage. Ainsi, la Figure 10 illustre un enregistrement du paramètre de tension d'une électrode lors de son soudage. En effet, plus un court-circuit est court plus le détachement de la goutte est facile et plus l'électrode est réputée dynamique. Ce type d'électrode présente bien souvent un meilleur comportement en position, le dynamisme étant synonyme de bon dégagement de laitier et de cordon plat.

Le paramètre de tension a donc été enregistré pour les trois types d'électrode susmentionnées à une fréquence de 30 kHz afin de pouvoir mesurer les durées de court-circuit et de voir leur répartition en fonction du consommable.

La Figure 11 présente la répartition des durées des courts-circuits obtenus à partir de ces enregistrements. La répartition est réalisée en pourcentage cumulé afin de pouvoir déterminer de manière aisée la proportion de courts-circuits présents dans une plage de temps donnée. On remarque que les électrodes ayant une concentration en Li > 0.06% en masse dans leur enrobage présentent une plus forte proportion de courts-circuits de durée inférieure à 4.2 ms. On trouve respectivement des valeurs de 30% et 43%.

Cet écart indique bien que le détachement des gouttes de métal en fusion est plus facile lorsque la concentration en Li est supérieure à 0.06% en masse dans l'enrobage du consommable quelle que soit l'âme utilisée pour fabriquer l'électrode enrobée.

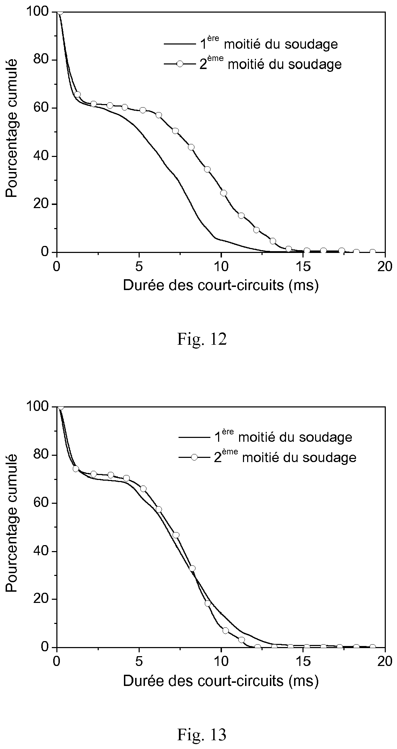

Par ailleurs, les Figures 12 à 14 représentent l'évolution de la répartition des durées de court-circuit en fonction de la partie du consommable soudée, c'est-à-dire fondue. Les deux parties appelées « 1ère moitié du soudage » et « 2ème moitié du soudage » sont déterminées en divisant le temps de soudage par deux.

La Figure 12 montre que la répartition des durées de courts-circuits dans le cas d'une électrode homogène varie de 33% entre la première et la deuxième partie. Ce phénomène peut être relié à l'échauffement de l'âme induisant une fusion plus facile du consommable et par conséquent, une formation de grosses gouttes plus difficile à détacher. On dit que l'électrode s'essouffle. Ceci est confirmé par les valeurs de fréquence des courts-circuits qui sont de 11 Hz dans la première moitié du soudage, donc avec un arc très court et très stable, et avec un bon transfert de métal fondu, et de seulement 5 Hz dans la deuxième moitié du soudage, donc conduisant à un arc court et moins stable, chaque court-circuit ne correspond pas forcément à un transfert de métal fondu.

Les Figures 13 et 14 montrent bien que, dans le cas d'un consommable synthétique, la répartition des durées de court-circuit n'évolue que très peu entre le début et la fin du soudage.

On trouve alors des différences de répartition de 6.9% et 6.5%, respectivement, pour une électrode synthétique contenant moins de 0.06% en masse de Li et pour une électrode synthétique contenant 0.28% en masse de Li dans l'enrobage.

Cette stabilité lors du soudage s'explique par l'utilisation d'une âme faiblement ou non alliée.

Il est à noter également la stabilité de la fréquence de court-circuit entre les deux parties de chaque électrode. On a déterminé ainsi des valeurs de 9 Hz et 7 Hz, respectivement, pour 0.28% et moins de 0.06% en masse de Li dans l'enrobage.

La présence de Li a également pour conséquence de raccourcir l'arc électrique et de le rendre ainsi plus rigide, donc plus directif, et plus stable avec un transfert plus régulier de métal fondu dans le bain tout au long de l'opération de soudage.

Une teneur en Cr supérieure à 3% est nécessaire pour conférer au métal déposé une résistance à la corrosion suffisante, en particulier pour les applications liées au grade 92 où le métal déposé doit contenir entre 8 et 10% (% en masse) de Cr pour résister convenablement à la corrosion sous pression induite par la vapeur d'eau. La maîtrise de cette teneur est importante car le Cr et d'autres éléments formateurs de phase ferrite delta tels que les éléments Nb, W, V, Si, Mo peuvent induire une forte susceptibilité à la fissuration à chaud. Afin d'éviter ce phénomène, et comme c'est le cas pour cette électrode enrobée, la balance de ces éléments est contrôlée.

L'insertion de Co dans le métal déposé permet d'augmenter la valeur de la température de transformation AC1 dudit métal déposé et offre ainsi une marge de sécurité accrue pour l'application d'un traitement thermique post-soudage.

Les éléments W, B, Nb et N sont insérés dans le consommable afin de conférer des propriétés de résistance au fluage au métal déposé. Si la balance de ces éléments n'est pas bien respectée ou si un de ces éléments est manquant, les propriétés de résistance au fluage s'en trouvent fortement dégradées.

Les électrodes enrobées selon la présente invention sont particulièrement bien adaptées au soudage d'acier fortement allié, c'est-à-dire contenant plus de 5 % en masse d'éléments d'alliage, par exemple les aciers du type grade 92.

## Revendications

1. Electrode enrobée (1) comprenant une âme centrale (2) en acier au moins en partie recouverte d'un enrobage (3) formant un revêtement autour de ladite âme centrale (2), l'âme centrale étant en acier faiblement ou non allié contenant du fer et moins de 5% en masse d'éléments d'alliage, et l'enrobage contenant du lithium, **caractérisée en ce que** l'enrobage contient de 0.06 à 1 % en masse de lithium et **en ce que** l'âme centrale comprend de 0.001 à 4% de chrome (% en masse de l'âme).

2. Electrode enrobée selon la revendication précédente, **caractérisée en ce que** l'âme centrale comprend de 0.001 à 3% de chrome (% en masse de l'âme), de préférence moins de 2,5% de chrome.

3. Electrode enrobée selon l'une des revendications précédentes, **caractérisée en ce que** le lithium (Li) compris dans l'enrobage est sous la forme de silicate de Li, de carbonate de Li, de feldspath de Li, de fluorure de Li, de chlorure de Li ou d'oxyde de Li

4. Electrode enrobée selon l'une des revendications précédentes, **caractérisée en ce que** l'âme centrale comprend (% en masse de l'âme) de 0.01 à 0.15% de carbone, au plus 0.5% de silicium, au plus 1.5% de manganèse, au plus 0.02% de phosphore, au plus 0.01% de soufre, de 0.001 à 4% de chrome, au plus 1% de molybdène, au plus 1% de nickel, de 0.001 à 0.04% d'aluminium, au plus 1.5% de cobalt, au plus 0.1% de niobium, au plus 0.5% de vanadium, au plus 2.5% de tungstène, au plus 0.1% de bore, au plus 0.1% d'azote et/ou de 90 à 99.9% de fer.

5. Electrode enrobée selon l'une des revendications précédentes, **caractérisée en ce que** l'âme centrale comprend (% en masse de l'âme) de 0.01 à 0.10% de carbone, au plus 0.2% de silicium, au plus 1 % de manganèse, au plus 0.01% de phosphore, de 0.001 à 0. 1% de chrome, au plus 0.1% de molybdène, au plus 0.1% de nickel, au plus 0.01% d'aluminium, au plus 0.01% de cobalt, au plus 0.01% de niobium, au plus 0.05% de vanadium, au plus 0.1% de tungstène, au plus 0.01% de bore et/ou au plus 0.01% d'azote.

6. Electrode enrobée selon l'une des revendications précédentes, **caractérisée en ce qu'**elle contient (% en masse de l'électrode) de 0.01 à 2% de carbone, de 0.5 à 4% de silicium, de 1 à 2.5% de manganèse, de 5 à 11% de chrome, de 0.1 à 1% de molybdène, de 0.1 à 1% de nickel, de 0.1 à 1% de cobalt, de 0.1 à 0.5% de niobium, de 0.1 à 0.5% de vanadium, de 0.9 à 2% de tungstène, de 0.01 à 0.1% de bore, de 0.01 à 0.1% d'azote, de 0.01 à 0.3% de lithium, de 0.01 à 0.5% de sodium, de 0.01 à 0.7% de potassium, de 5 à 15% de calcium, de 1 à 10% de fluor et/ou de 40 à 80 % de fer.

7. Electrode enrobée selon l'une des revendications précédentes, **caractérisée en ce que** les éléments d'alliage de l'acier allié sont choisis dans le groupe formé par C, Mn, Si, Cr, Ni, Co, Mo, Nb, V, B, W et N.

**8.** Procédé de soudage à l'arc électrique d'une ou plusieurs pièces métalliques mettant en œuvre une électrode enrobée selon l'une des revendications précédentes.

**9.** Procédé de soudage selon la revendication 8, **caractérisé en ce que** la ou les pièces à souder sont en un acier faiblement et/ou fortement allié contenant de 3 à 20 % en masse d'éléments d'alliage.

**10.** Procédé de soudage selon la revendication 8, **caractérisé en ce que** le soudage est opéré à plat, au plafond, en verticale montant ou en corniche.


**Patentansprüche**

**1.** Umhüllte Elektrode (1), umfassend einen Zentralkern (2) aus Stahl, der zumindest teilweise mit einer Beschichtung (3) bedeckt ist, die einen Überzug um den Kern (2) bildet, wobei der Zentralkern aus niedrig- oder unlegiertem Stahl besteht, der Eisen und weniger als 5 Gew.-% Legierungselemente enthält, und wobei die Beschichtung Lithium enthält, **dadurch gekennzeichnet, dass** die Beschichtung 0,06 bis 1 Gew.-% Lithium enthält und dass der Zentralkern 0,001 bis 4 Gew.-% Chrom (Gew.-% des Kerns) umfasst.

**2.** Umhüllte Elektrode nach dem vorangehenden Anspruch, **dadurch gekennzeichnet, dass** der Zentralkern 0,001 bis 3 % Chrom (Gew.-% des Kerns), vorzugsweise weniger als 2,5 % Chrom, umfasst.

**3.** Umhüllte Elektrode nach einem der vorangehenden Ansprüche, **dadurch gekennzeichnet, dass** das in der Beschichtung enthaltene Lithium (Li) in Form von Li-Silikat, Li-Carbonat, Li-Feldspat, Li-Fluorid, Li-Chlorid oder Li-Oxid vorliegt.

**4.** Umhüllte Elektrode nach einem der vorangehenden Ansprüche, **dadurch gekennzeichnet, dass** der Zentralkern (in Gew. -% des Kerns) 0,01 bis 0,15 % Kohlenstoff, höchstens 0,5 % Silizium, höchstens 1,5 % Mangan, höchstens 0,02 % Phosphor, höchstens 0,01 % Schwefel, 0,001 bis 4 % Chrom, höchstens 1 % Molybdän, höchstens 1 % Nickel, 0,001 bis 0,04 % Aluminium, höchstens 1,5 % Kobalt, höchstens 0,1 % Niob, höchstens 0,5 % Vanadium, höchstens 2,5 % Wolfram, höchstens 0,1 % Bor, höchstens 0,1 % Stickstoff und/oder 90 bis 99,9 % Eisen umfasst.

**5.** Umhüllte Elektrode nach einem der vorangehenden Ansprüche, **dadurch gekennzeichnet, dass** der Zentralkern (in Gew. -% des Kerns) 0,01 bis 0,10 % Kohlenstoff, höchstens 0,2 % Silizium, höchstens 1 % Mangan, höchstens 0,01 % Phosphor, 0,001 bis 0,1 % Chrom, höchstens 0,1 % Molybdän, höchstens 0,1 % Nickel, höchstens 0,01 % Aluminium, höchstens 0,01 % Kobalt, höchstens 0,01 % Niob, höchstens 0,05 % Vanadium, höchstens 0,1 % Wolfram, höchstens 0,01 % Bor und/oder höchstens 0,01 % Stickstoff umfasst.

**6.** Umhüllte Elektrode nach einem der vorangehenden Ansprüche, **dadurch gekennzeichnet, dass** sie (in Gew. - % der Elektrode) 0,01 bis 2 % Kohlenstoff, 0,5 bis 4 % Silizium, 1 bis 2,5 % Mangan, 5 bis 11 % Chrom, 0,1 bis 1 % Molybdän, 0,1 bis 1 % Nickel, 0,1 bis 1 % Kobalt, 0,1 bis 0,5 % Niob, 0,1 bis 0,5 % Vanadium, 0,9 bis 2 % Wolfram, 0,01 bis 0,1 % Bor, 0,01 bis 0,1 % Stickstoff, 0,01 bis 0,3 % Lithium, 0,01 bis 0,5 % Natrium, 0,01 bis 0,7 % Kalium, 5 bis 15 % Calcium, 1 bis 10 % Fluor und/oder 40 bis 80 % Eisen umfasst.

**7.** Umhüllte Elektrode nach einem der vorangehenden Ansprüche, **dadurch gekennzeichnet, dass** die Legierungselemente des legierten Stahls ausgewählt sind aus der Gruppe bestehend aus C, Mn, Si, Cr, Ni, Co, Mo, Nb, V, B, W und N.

**8.** Verfahren zum elektrischen Lichtbogenschweißen eines oder mehrerer Metallteile unter Verwendung einer umhüllten Elektrode nach einem der vorangehenden Ansprüche.

**9.** Schweißverfahren nach Anspruch 8, **dadurch gekennzeichnet, dass** das oder die zu schweißenden Teile aus einem niedrig- und/oder hochlegierten Stahl mit 3 bis 20 Gew.-% Legierungselementen bestehen.

**10.** Schweißverfahren nach Anspruch 8, **dadurch gekennzeichnet, dass** das Schweißen flach, an der Decke, vertikal nach oben oder in einem Gesims durchgeführt wird.

**Claims**

1. Coated electrode (1) comprising a central steel core (2) at least partly covered with a coating (3) forming a coating around said central core (2), the central core being low-alloy or non-alloy steel containing iron and less than 5% by weight of alloying elements, and the coating containing lithium, **characterized in that** the coating contains from 0.06 to 1% by weight of lithium and **in that** the central core comprises 0.001 to 4% chromium (% by weight of the core).

2. Coated electrode according to the preceding claim, **characterized in that** the central core comprises 0.001 to 3% chromium (% by weight of the core), preferably less than 2.5% chromium.

3. Coated electrode according to one of the preceding claims, **characterized in that** the lithium (Li) included in the coating is in the form of Li silicate, Li carbonate, Li feldspar, Li fluoride, Li chloride or Li oxide

4. Coated electrode according to one of the preceding claims, **characterized in that** the central core comprises (% by weight of the core) of 0.01 to 0.15% carbon, at most 0.5% silicon, at most 1.5% of manganese, not more than 0.02% phosphorus, not more than 0.01% sulfur, 0.001 to 4% chromium, not more than 1% molybdenum, not more than 1% nickel, 0.001 to 0.04% aluminum, not more than 1.5 % of cobalt, not more than 0.1% of niobium, not more than 0.5% of vanadium, not more than 2.5% of tungsten, not more than 0.1% of boron, not more than 0.1% of nitrogen and / or of 90 to 99.9% of iron.

5. Coated electrode according to one of the preceding claims, **characterized in that** the central core comprises (% by weight of the core) of 0.01 to 0.10% carbon, at most 0.2% silicon, at most 1% of manganese, not more than 0.01% phosphorus, 0.001 to 0.1% chromium, not more than 0.1% molybdenum, not more than 0.1% nickel, not more than 0.01% aluminum, not more than 0.01% cobalt, not more than 0.01% of niobium, not more than 0.05% of vanadium, not more than 0.1% of tungsten, not more than 0.01% of boron and / or not more than 0.01 % of nitrogen.

6. Coated electrode according to one of the preceding claims, **characterized in that** it contains (% by weight of the electrode) of 0.01 to 2% carbon, 0.5 to 4% silicon, 1 to 2.5% of manganese, 5 to 11% chromium, 0.1 to 1% molybdenum, 0.1 to 1% nickel, 0.1 to 1% cobalt, 0.1 to 0.5% niobium, 0.1 to 0.5% vanadium, 0.9 to 2% tungsten, 0.01 to 0.1% boron, 0.01 to 0.1% nitrogen, 0.01 to 0.3% lithium, 0.01 to 0.5% sodium, 0.01 to 0.7% potassium, 5 to 15% calcium, 1 to 10% fluorine and / or 40 to 80% iron.

7. Coated electrode according to one of the preceding claims, **characterized in that** the alloying elements of the alloy steel are selected from the group consisting of C, Mn, Si, Cr, Ni, Co, Mo, Nb, V , B, W and N.

8. A method of electric arc welding of one or more metal parts using a coated electrode according to one of the preceding claims.

9. A welding method according to claim 8, **characterized in that** the part or parts to be welded are a low and / or high alloy steel containing from 3 to 20% by weight of alloying elements.

10. A welding method according to claim 8, **characterized in that** the welding is executed on the floor, on the ceiling, on a vertical rising or on a cornice.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1570944 A1

- EP 1125673 A1

**Littérature non-brevet citée dans la description**

- **R. DEDYUKH.** Increasing the stability of the parameters of the process of arc welding with coated electrodes at low current. *Welding International,* 2004, vol. 18 (12), 963

- **G. DATTA.** Arc-length, arc-voltage and mode of metal transfer in metal-arc welding with coated electrodes. *IE (I) Journal-ME,* 1973, vol. 53, 181